# FASCICULE DE BREVET EUROPEEN

(11) **EP 2 223 524 B1**
(45) Date de publication et mention de la délivrance du brevet: **18.09.2013**
(21) Numéro de dépôt: 08853689.1
(22) Date de dépôt: 05.11.2008
(51) Int. Cl.: H04N 21/4405, H04N 21/2662, H04N 21/4623

(54) **PROCÉDÉ DE CONDITIONNEMENT ET DE CONTRÔLE D'ACCÈS À DES CONTENUS EN CODAGE HIÉRARCHIQUE, PROCESSEUR ET ÉMETTEUR POUR CE PROCÉDÉ**
VERFAHREN ZUM KONDITIONIEREN UND STEUERN DES ZUGANGS ZU HIERARCHISCHEM CODIERUNGSINHALT UND PROZESSOR UND SENDER FÜR DAS VERFAHREN
METHOD FOR CONDITIONING AND CONTROLLING THE ACCESS TO HIERARCHICAL CODING CONTENT, AND PROCESSOR AND TRANSMITTER FOR SAID METHOD

(30) Priorité: 09.11.2007 FR 0758921
(43) Date de publication de la demande: 01.09.2010
(73) Titulaire: Viaccess, 92057 Paris La Défense Cedex (FR)
(72) Inventeur: DUBROEUCQ, Gilles, F-28130 Saint Piat (FR)
(74) Mandataire: Blot, Philippe Robert Emile
(86) Numéro de dépôt international: PCT/FR2008/051998
(87) Numéro de publication internationale: WO 2009/068785

(56) Documents cités:
- EP-A- 1 465 426
- EP-A- 1 465 427
- WO-A-2004/057873
- US-A1- 2003 190 042
- US-A1- 2006 090 082
- US-A1- 2007 098 162
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936 cité dans la demande
- FENG-CHENG CHANG ET AL: "Layered Access Control Schemes on Watermarked Scalable Media" CIRCUITS AND SYSTEMS, 2005. ISCAS 2005. IEEE INTERNATIONAL SYMPOSIUM O N KOBE, JAPAN 23-26 MAY 2005, PISCATAWAY, NJ, USA,IEEE, 23 mai 2005 (2005-05-23), pages 4983-4986, XP010816716 ISBN: 978-0-7803-8834-5

## Description

La présente invention concerne un procédé de conditionnement et de contrôle d'accès à des contenus en codage hiérarchique embrouillés, un processeur et un émetteur pour ce procédé.

Un contenu en codage hiérarchique embrouillé est un programme multimédia codé et embrouillé par composantes, dont les composantes sont en outre hiérarchiquement organisées de façon à correspondre à des niveaux de complétude ordonnés dudit contenu. La notion considérée de complétude du contenu dépend du contexte d'application du procédé ; une liste non limitative d'exemples en sera donnée dans la suite.

Un programme multimédia codé et embrouillé par composantes est un flux formé d'au moins k flux élémentaires d'informations I₁ à Iₖ, où k est un entier supérieur ou égal à deux. Typiquement, chaque flux élémentaire d'informations I₁ à Iₖ est transporté par un canal respectif C₁ à Cₖ de données. Ces flux élémentaires d'informations I₁ à Iₖ sont temporellement synchronisés les uns avec les autres.

Dans un contenu en codage hiérarchique embrouillé, ces flux élémentaires, ou composantes, sont en outre hiérarchiquement organisé(e)s les un(e)s par rapport aux autres de la façon suivante :
- le flux élémentaire d'informations I₁ correspond au niveau de complétude le plus bas du contenu et contient des informations I₁ de type vidéo ou audio destinées à être utilisées par un dispositif multimédia, après désembrouillage, afin d'être rendues directement compréhensibles et intelligibles par un être humain, sans qu'il soit nécessaire d'y ajouter des informations I₂ à Iₖ, le flux élémentaire d'informations I₁ étant embrouillé avec un mot de contrôle CW₁,
- le flux élémentaire d'informations Iᵢ, pour i strictement supérieur à 1, correspond à un niveau de complétude i supérieur au niveau de complétude i-1 du flux élémentaire d'informations Iᵢ₋₁, et l'améliorant directement, le flux élémentaire d'informations Iᵢ contenant des informations Iᵢ, destinées à être utilisées par le dispositif multimédia, après désembrouillage, en même temps que les informations I₁ à Iᵢ₋₁ afin que la combinaison des informations I₁ à Iᵢ ainsi réalisée soit directement compréhensible et intelligible par un être humain, les informations Iᵢ complétant les informations Iᵢ₋₁ de sorte que les informations I₁ peuvent graduellement être complétées, dans l'ordre, par les informations I₂ et suivantes, ce qui rend possible l'utilisation, par un dispositif multimédia, du programme multimédia dans k niveaux différents de complétude, le niveau de complétude allant croissant au fur et à mesure que l'indice i croît, chaque flux élémentaire d'informations Iᵢ étant embrouillé avec un mot de contrôle CWᵢ différent des mots de contrôle CWⱼ, où j est différent de i.

Un programme multimédia peut être une émission de télévision, un film ou tout autre contenu multimédia destiné à être joué par un dispositif multimédia. Le dispositif multimédia est, par exemple, un poste de télévision lorsque le programme multimédia est une émission de télévision ou un film. Lorsque le programme multimédia est uniquement composé d'un contenu audio, le dispositif multimédia peut être une simple chaîne HIFI.

On dit que les informations sont directement compréhensibles et intelligibles par un être humain lorsqu'elles sont jouées par un dispositif multimédia si cet être humain est capable de percevoir et de comprendre les informations restituées par le dispositif multimédia sans l'aide de dispositifs électroniques complémentaires.

Le déposant connaît des procédés de contrôle d'accès à des contenus codés et embrouillés par composantes, mais sans relation hiérarchique, comportant :
- la réception de messages ECMᵢ (Entitlement Control Message), chaque message ECMᵢ contenant des conditions d'accès CAᵢ et un premier cryptogramme (CWᵢ)_{CEi} obtenu en chiffrant le mot de contrôle CWᵢ avec une clé d'exploitation CEᵢ,
- la transmission au moins du message ECMₖ à un processeur de sécurité,
- la comparaison par le processeur de sécurité des conditions d'accès CAₖ contenues dans le message ECMₖ à des titres d'accès TA préalablement enregistrés dans le processeur de sécurité, et
- le déchiffrement par le processeur de sécurité du premier cryptogramme (CWₖ)_{CEk} contenu dans le message ECMₖ à l'aide de la clé d'exploitation CEₖ uniquement si les conditions d'accès CAₖ correspondent aux titres d'accès TA et, dans le cas contraire, l'interruption du traitement du message ECMₖ reçu.

Les procédés connus comportent également :
- la comparaison de chaque condition d'accès CAᵢ, pour i strictement inférieur à k, aux titres d'accès TA préalablement enregistrés dans le processeur de sécurité, et
- le déchiffrement du premier cryptogramme (CWᵢ)_{CEi} contenu dans le message ECMᵢ uniquement si les conditions d'accès CAᵢ correspondent aux titres d'accès TA préalablement enregistrés.

Typiquement, les clés d'exploitation CEᵢ et les titres d'accès TA sont mis à jour régulièrement, par exemple mensuellement, en utilisant des messages EMMᵢ (Entitlement Management Message). De façon à simplifier cette gestion, plusieurs composantes peuvent partager une même clé d'exploitation.

Le document de l'art antérieur WO 2004/57873 décrit un appareil pour traiter un flux numérique vidéo à couches ; appareil dans lequel des ECMs comprenant des mots de contrôle cryptés peuvent être associés respectivement à chacune des couches.

Dans la suite de ce texte on utilise la terminologie classique employée dans le domaine technique de la diffusion des programmes multimédias embrouillés vers une multitude de récepteurs. Ainsi, les termes tels que « mot de contrôle », message « ECM » ou « EMM » ne sont pas définis ici plus en détail.

Pour une meilleure compréhension concernant la terminologie propre à ce domaine technique, on pourra se reporter au document suivant : « FUNCTIONAL MODEL OF A CONDITIONAL ACCESS SYSTEM » EBU REVIEW-TECHNICAL EUROPEAN BROADCASTING UNION. BRUSSELS, BE, no 266 21 décembre 1995.

Un processeur de sécurité est typiquement un calculateur programmable sécurisé. Lorsqu'il est amovible, il peut se présenter sous de multiples formes telles que celle, usuelle, d'une carte à puce, mais aussi celles d'un dongle, d'une clé USB, ou d'autres formats plus récents de modules amovibles de stockage.

La variété de ces supports et l'objectif de leur permettre l'utilisation des mêmes contenus de façon transparente pour l'utilisateur, rendent aujourd'hui souhaitable de minimiser la puissance de calcul requise pour mettre en oeuvre les procédés de contrôle d'accès à des contenus codés et embrouillés par composantes hiérarchiques.

L'invention vise à satisfaire ce besoin en proposant un procédé de contrôle d'accès à des contenus codés et embrouillés par composantes hiérarchiques, nécessitant une puissance de calcul réduite par rapport aux procédés connus.

Elle a donc pour objet un procédé de contrôle d'accès dit hiérarchique, comportant :
- la réception et la transmission au processeur de sécurité de seconds cryptogrammes (CWᵢ)_{Ki}, pour i compris entre 1 et k-1, obtenus en chiffrant les mots de contrôle CW₁ à CWₖ₋ᵢ avec des clés respectives K₁ à Kₖ₋₁ construites avec au moins une partie de l'ensemble formé des informations présentes dans l'ECMₖ et de la clé d'exploitation CEₖ,
- le déchiffrement du premier cryptogramme (CWₖ)_{CEk} et des seconds cryptogrammes (CWᵢ)_{Ki} uniquement si les conditions d'accès CAₖ reçues dans le message ECMₖ correspondent aux titres d'accès TA et sans comparer au préalable les conditions d'accès CAᵢ aux titres d'accès TA pour i strictement inférieur à k, et dans le cas contraire,
- l'interdiction du déchiffrement du premier cryptogramme (CWₖ)_{CEk} et des seconds cryptogrammes (CWᵢ)_{Ki} pour i compris entre 1 et k-1, si les conditions d'accès CAₖ ne correspondent pas aux titres d'accès TA.

Dans le procédé ci-dessus, il n'est pas nécessaire de procéder à la comparaison des conditions d'accès CAᵢ aux titres d'accès TA pour tous les messages ECMᵢ, où i est strictement inférieur à k, afin de pouvoir obtenir les mots de contrôle CW₁ à CWₖ. Puisque ces opérations de comparaison ne sont pas systématiquement nécessaires pour obtenir les mots de contrôle CW₁ à CWₖ, la puissance de calcul requise du processeur de sécurité est réduite.

De plus, lorsque les seconds cryptogrammes (CWᵢ)_{Ki} utilisés ici sont déchiffrés avec des clés Kᵢ obtenues à partir des seules informations présentes dans l'ECMₖ et de la clé d'exploitation CEₖ, le déchiffrement des mots de contrôle CW₁ à CWₖ est possible même si les clés d'exploitation CE₁ à CEₖ₋₁ ne sont pas à jour, par exemple. Dans ce cas, dans le procédé ci-dessus, la gestion et la mise à jour des clés CE₁ à CEₖ₋₁ n'est pas nécessaire pour obtenir les mots de contrôle CW₁ à CWₖ. Ceci peut être mis à profit pour simplifier la gestion des clés d'exploitation CEᵢ pour i compris entre 1 et (k-1) tout en maintenant la possibilité d'accès au niveau k.

Les modes de réalisation de ce procédé de contrôle d'accès hiérarchique peuvent comporter une ou plusieurs des caractéristiques suivantes :
- le procédé comporte la construction d'au moins l'une des clés Kᵢ, pour i compris entre 1 et k-1, à partir d'informations uniquement contenues dans le message ECMₖ de sorte que si le traitement du message ECMₖ est interrompu car les conditions d'accès CAₖ ne correspondent pas aux titres d'accès TA, le déchiffrement d'au moins un des seconds cryptogrammes est rendu impossible ;
- le procédé comporte la construction d'au moins l'une des clés Kᵢ, pour i compris entre 1 et k-1, à partir du mot de contrôle CWₖ obtenu après déchiffrement du premier cryptogramme (CWₖ)_{CEk} uniquement lorsque les conditions d'accès CAₖ correspondent aux titres d'accès TA ;
- le procédé comporte la construction de la clé Kₖ₋₁ à partir du mot de contrôle CWₖ obtenu après déchiffrement du premier cryptogramme (CWₖ)_{CEk} uniquement lorsque les conditions d'accès CAₖ correspondent aux titres d'accès TA, et la construction de chaque clé Kᵢ, pour i strictement inférieur à k-1, à partir du mot de contrôle CWᵢ₊₁ obtenu après déchiffrement du second cryptogramme (CWᵢ₊₁)_{Ki+1} ;
- le procédé comporte pour chaque message ECMᵢ reçu , pour i compris entre 1 et k, au plus le déchiffrement d'un seul second cryptogramme (CWⱼ)_{Kj} pour j compris entre 1 et i-1 ;
- le procédé comporte pour le message ECMₖ, en plus du déchiffrement du premier cryptogramme (CWₖ)_{CEk}, le déchiffrement de l'ensemble des seconds cryptogrammes, (CWᵢ)_{Ki} pour i compris entre 1 et k-1, contenu dans ce message ECMₖ ;
- chaque flux élémentaire d'informations Iᵢ, pour i strictement supérieur à 1, ne contient pas assez d'informations pour être directement compréhensible et intelligible par un être humain lorsqu'il est joué seul par le dispositif multimédia ;
- chaque flux élémentaire d'informations I₁ à Iₖ est transporté par l'intermédiaire d'un canal respectif C₁ à Cₖ de données.

Les modes de réalisation du procédé de contrôle d'accès hiérarchique présentent en outre les avantages suivants :
- la construction de la clé Kₖ₋₁ à partir du mot de contrôle CWₖ, et de chaque clé Kᵢ, pour i strictement inférieur à k-1, à partir du mot de contrôle CWᵢ₊₁ rend le déchiffrement de l'un quelconque des seconds cryptogrammes impossible tant que le cryptogramme (CWₖ)_{CEk} n'a pas été déchiffré avec succès,
- placer au plus un second cryptogramme (CWᵢ)_{Ki} dans chaque message ECMᵢ limite la taille de chaque message ECMᵢ,
- placer l'ensemble des seconds cryptogrammes dans le message ECMₖ permet le désembrouillage des flux d'informations I₁ à Iₖ sans qu'il soit nécessaire pour cela d'envoyer au processeur de sécurité les messages ECM₁ à ECMₖ₋₁,

L'invention a également pour objet un procédé de conditionnement d'accès, dit hiérarchique, d'un programme multimédia comportant :
- l'embrouillage des flux élémentaires d'informations I₁ à Iₖ respectivement avec des mots de contrôle CW₁ à CWₖ, chaque mot de contrôle CWᵢ étant différent des mots de contrôle CWⱼ, où i est différent de i,
- la construction et la transmission de messages ECMᵢ, où i est un nombre entier compris entre 1 et k, chaque message ECMᵢ contenant des conditions d'accès CAᵢ et un premier cryptogramme (CWᵢ)_{CEi} obtenu en chiffrant le mot de contrôle CWᵢ avec une clé d'exploitation CEᵢ,
- la construction et la transmission de seconds cryptogrammes, (CW_{¡})_{Ki} pour i compris entre 1 et k-1, obtenus en chiffrant les mêmes mots de contrôle CW₁ à CWₖ₋ᵢ avec des clés respectives K₁ à Kₖ₋₁ construites avec au moins une partie de l'ensemble formé des informations présentes dans l'ECMₖ et de la clé d'exploitation CEₖ.

L'invention a également pour objet un processeur de sécurité pour la mise en oeuvre du procédé de contrôle d'accès hiérarchique ci-dessus, ce processeur de sécurité comprenant une mémoire stockant des titres d'accès TA préalablement enregistrés et au moins une clé d'exploitation CEₖ, ce processeur de sécurité étant apte à :
- comparer les conditions d'accès CAₖ contenues dans le message ECMₖ aux titres d'accès TA préalablement enregistrés dans la mémoire de ce processeur de sécurité, et
- déchiffrer le premier cryptogramme (CWₖ)_{CEk} contenu dans le message ECMₖ à l'aide de la clé d'exploitation CEₖ uniquement si les conditions d'accès CAₖ correspondent aux titres d'accès TA et, dans le cas contraire, à interrompre le traitement du message ECMₖ reçu.

Ce processeur de sécurité est également apte à :
- recevoir des seconds cryptogrammes, (CWᵢ)_{Ki} pour i compris entre 1 et k-1, obtenus en chiffrant les mots de contrôle CW₁ à CWₖ₋₁ avec des clés respectives K₁ à Kₖ₋₁ construites avec au moins une partie de l'ensemble formé des informations présentes dans l'ECMₖ et de la clé d'exploitation CEₖ,
- déchiffrer les seconds cryptogrammes (CWᵢ)_{Ki} uniquement si les conditions d'accès CAₖ reçues dans le message ECMₖ correspondent aux titres d'accès TA et sans comparer au préalable les conditions d'accès CAᵢ aux titres d'accès TA pour i strictement inférieur à k, et dans le cas contraire,
- interdire le déchiffrement des seconds cryptogrammes (CWᵢ)_{Ki} si les conditions d'accès CAₖ ne correspondent pas aux titres d'accès TA.

L'invention a également pour objet un émetteur pour la mise en oeuvre du procédé de conditionnement d'accès hiérarchique ci-dessus, cet émetteur comprenant :
- un embrouilleur propre à embrouiller les flux élémentaires d'informations I₁ à Iₖ respectivement avec des mots de contrôle CW₁ à CWₖ, chaque mot de contrôle CWᵢ étant différent des mots de contrôle CWⱼ, où i est différent de i,
- un générateur de messages ECMᵢ, où i est un nombre entier compris entre 1 et k, chaque message ECMᵢ contenant des conditions d'accès CAᵢ et un premier cryptogramme (CWᵢ)_{CEi} obtenu en chiffrant le mot de contrôle CWᵢ avec une clé d'exploitation CEᵢ.

Cet émetteur est apte à construire et à diffuser des seconds cryptogrammes, (CWᵢ)_{Ki} pour i compris entre 1 et k-1, obtenus en chiffrant les mêmes mots de contrôle CW₁ à CWₖ₋₁ avec des clés respectives K₁ à Kₖ₋₁ construites avec au moins une partie de l'ensemble formé des informations présentes dans l'ECMₖ et de la clé d'exploitation CEₖ.

L'invention sera mieux comprise à la lecture de la description qui va suivre, donnée uniquement à titre d'exemple non limitatif.

Cette description est faite en se référant aux dessins sur lesquels :
- la figure 1 est une illustration schématique d'un système d'émission et de réception de programmes multimédias embrouillés,
- la figure 2 est une illustration schématique d'un exemple d'organisation hiérarchique de flux élémentaires d'informations d'un programme multimédia,
- la figure 3 est une illustration schématique d'une portion d'un flux d'informations multiplexées émis par un émetteur du système de la figure 1,
- la figure 4 est une illustration schématique d'une table PMT (Program Map Table) utilisée dans le système de la figure 1,
- la figure 5 est une illustration schématique d'une portion d'un flux élémentaire d'informations de la figure 2,
- la figure 6 est une illustration schématique d'un message ECMᵢ correspondant à un paquet du flux d'informations multiplexées de la figure 3,
- la figure 7 est un organigramme d'un procédé de conditionnement et de contrôle d'accès à un programme multimédia mis en oeuvre dans le système de la figure 1, et
- la figure 8 est un organigramme d'un autre mode de réalisation du procédé de la figure 7.

Dans ces figures, les mêmes références sont utilisées pour désigner les mêmes éléments.

Dans la suite de cette description, les caractéristiques et fonctions bien connues de l'homme du métier ne sont pas décrites en détail.

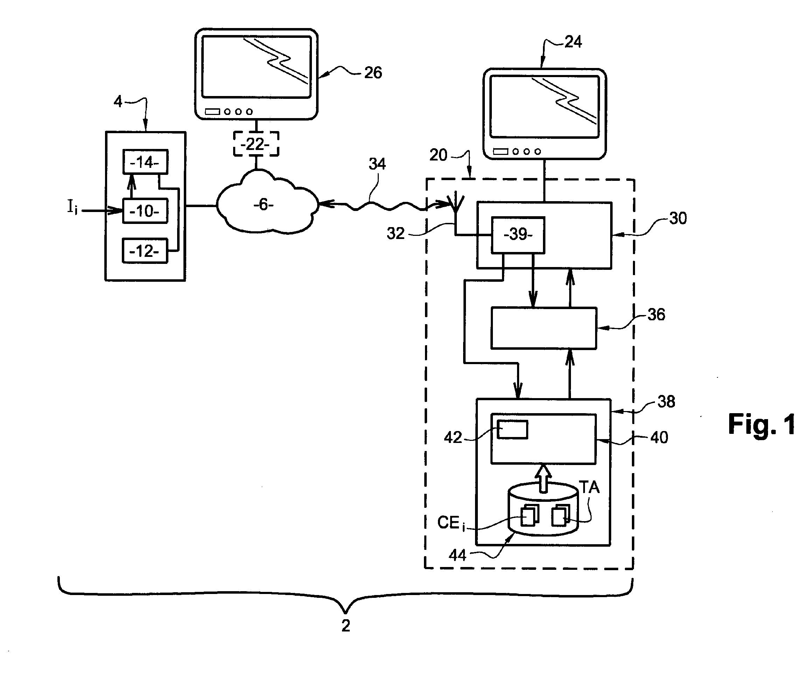

La figure 1 représente un système 2 de diffusion et de réception de programmes multimédias embrouillés. Ce système 2 comporte un émetteur 4 de programmes multimédias embrouillés raccordé à une multitude de récepteurs par l'intermédiaire d'un réseau 6 grande distance de transmission d'informations également connu sous l'acronyme WAN (Wide Area Network).

Le réseau 6 est, par exemple, un réseau de transmission d'informations par l'intermédiaire de satellites ou un réseau WAN sur lequel est mis en oeuvre le protocole IP (Internet Protocol) tel que la toile d'araignée mondiale plus connue sous le terme « Internet ».

L'émetteur 4 reçoit des flux élémentaires d'informations formant un programme multimédia Pₐ à diffuser vers l'ensemble des récepteurs sous forme embrouillée. A cet effet, l'émetteur 4 comprend un embrouilleur 10 propre à embrouiller chaque flux élémentaire d'informations Iᵢ à l'aide d'un mot de contrôle respectif CWᵢ afin d'obtenir un flux d'informations embrouillées.

L'émetteur 4 comprend également un générateur 12 de messages ECMᵢ (Entitlement Control Message). Chaque message ECMᵢ contient un cryptogramme (CWᵢ)_{CEi} du mot de contrôle CWᵢ utilisé pour embrouiller un flux élémentaire d'informations. Plus précisément, le cryptogramme (CWᵢ)_{CEi} est obtenu en chiffrant le mot de contrôle CWᵢ à l'aide d'une clé d'exploitation CEᵢ. Les mots de contrôle CWᵢ et les clés d'exploitation CEᵢ sont changés régulièrement. Toutefois, les mots de contrôle CWᵢ sont modifiés beaucoup plus fréquemment que les clés d'exploitation CEᵢ. Par exemple, les mots de contrôle sont modifiés avec une périodicité inférieure à la minute, tandis que les clés d'exploitation sont modifiées avec une périodicité supérieure à plusieurs semaines et, typiquement, supérieure ou égale à quatre semaines.

L'émetteur 4 comprend également un multiplexeur 14 apte à créer un flux Fₘ d'informations multiplexées contenant entre autres les flux élémentaires d'informations embrouillées et les messages ECMᵢ générés.

L'émetteur 4 est apte à diffuser le flux Fₘ vers l'ensemble des récepteurs connectés au réseau 6.

Pour simplifier la figure 1, seuls deux récepteurs 20, 22 raccordés à leurs dispositifs multimédias respectifs 24, 26 ont été représentés.

Par exemple, les dispositifs 24 et 26 sont ici des postes de télévision.

Ici, les récepteurs 20 et 22 sont identiques et seul le récepteur 20 sera décrit plus en détail.

Le récepteur 20 comprend :
- un décodeur 30 raccordé, par exemple, au réseau 6 par l'intermédiaire d'une antenne 32 et d'une liaison sans fil 34,
- une unité de désembrouillage 36 propre à désembrouiller les informations embrouillées reçues par l'intermédiaire de la liaison 34, et
- un processeur de sécurité 38 propre à déchiffrer les mots de contrôle CWᵢ nécessaires au désembrouillage des informations embrouillées.

Par exemple, le décodeur est équipé d'un démultiplexeur 39 propre à recevoir le flux Fₘ transmis par l'intermédiaire du réseau 6 et à transmettre les messages ECMᵢ au processeur de sécurité 38 et les flux élémentaires d'informations embrouillés à l'unité de désembrouillage 36.

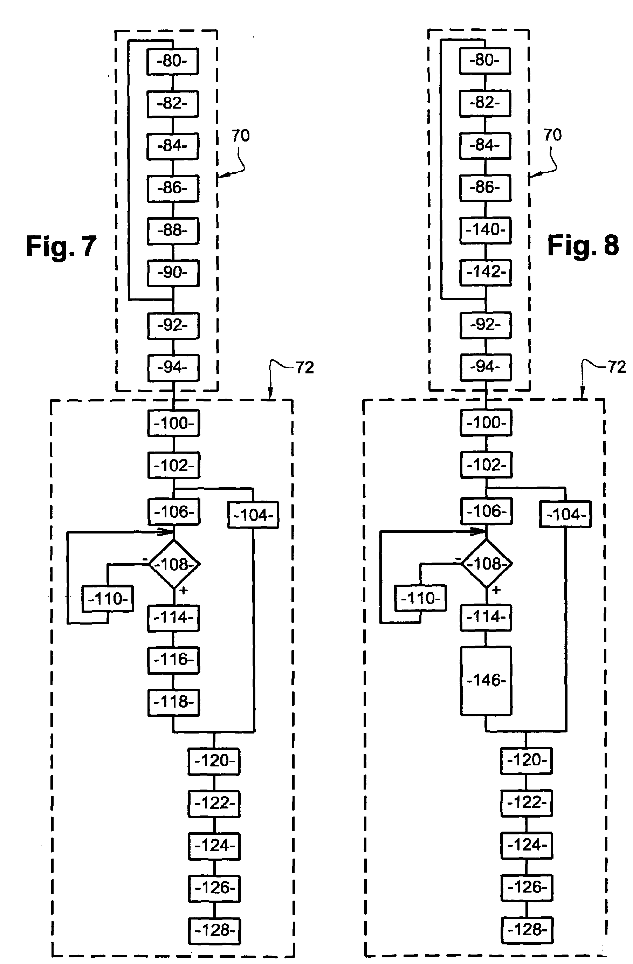

Le processeur de sécurité 38 comporte un calculateur électronique programmable 40 dans lequel est implémenté un module cryptographique 42 propre à effectuer les opérations de déchiffrement nécessaires à l'exécution du procédé de la figure 7.

Le processeur de sécurité 38 comporte également une mémoire 44 raccordée au calculateur 40. Cette mémoire 44 comporte les informations nécessaires au désembrouillage du programme multimédia Pₐ. En particulier, la mémoire 44 comporte :
- les clés d'exploitation CEᵢ nécessaires au déchiffrement des mots de contrôle CWᵢ, et
- des titres d'accès TA permettant d'autoriser et, en alternance, d'interdire le déchiffrement des mots de contrôle CWᵢ.

Les clés d'exploitation CEᵢ et les titres d'accès TA sont enregistrés dans la mémoire 44 avant la réception du programme multimédia Pₐ. Typiquement, les clés d'exploitation CEᵢ et les titres d'accès TA sont mis à jour par l'intermédiaire de messages EMM (Entitlement Management Message), reçus à intervalles réguliers par l'intermédiaire du réseau 6.

Le processeur de sécurité 38 est apte à transmettre à l'unité de désembrouillage 36 les mots de contrôle déchiffrés CWᵢ.

L'unité de désembrouillage 36 est apte à désembrouiller les informations embrouillées à l'aide des mots de contrôle CWᵢ transmis par le processeur de sécurité 38.

Le décodeur 30 est également apte à transmettre au dispositif multimédia 24 des signaux vidéo et audio obtenus à partir du programme multimédia Pₐ désembrouillés afin que ceux-ci puissent être présentés en clair à l'utilisateur. On considère que la présentation des signaux vidéo et audio est réalisée « en clair » si les images et les sons présentés par le dispositif 24 sont directement compréhensibles et intelligibles par un être humain sans passer par l'intermédiaire de dispositifs électroniques supplémentaires. Plus généralement, une utilisation, autre que sa présentation à l'utilisateur, peut être faite du programme multimédia en clair.

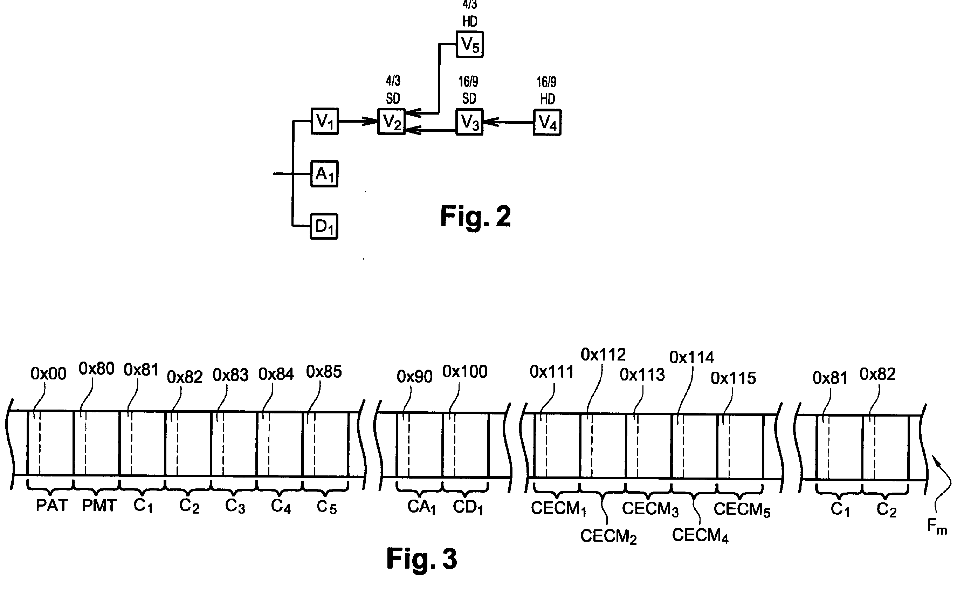

La figure 2 représente un exemple des différents flux élémentaires d'informations qui constituent le programme multimédia Pₐ. Ici, le programme multimédia Pₐ est décomposé en plusieurs types de données et chaque type de données est décomposé en un ou plusieurs flux élémentaires d'informations.

Les différents flux élémentaires d'informations d'un même programme multimédia sont synchronisés temporellement les uns par rapport aux autres. De plus, ici, les différents flux élémentaires d'un même type de données sont organisés hiérarchiquement les uns par rapport aux autres.

Par exemple, ici, on distingue trois types de données, à savoir les données vidéo, les données audio et les données alphanumériques. Dans cet exemple, on suppose que les données alphanumériques et les données audio ne sont formées, respectivement, que d'un seul flux élémentaire d'informations A₁ et D₁. Par contre, les données vidéo sont formées de cinq flux élémentaires d'informations V₁ à V₅.

Les flux élémentaires d'informations V₁ à V₅ sont organisés hiérarchiquement les uns par rapport aux autres. Ici, l'organisation hiérarchique de ces flux est représentée sous forme d'une structure arborescente dans laquelle :
- le flux d'informations V₁ est au niveau hiérarchique le plus bas, noté ici niveau 1, et constitue le noeud racine de cette structure arborescente,
- le flux d'informations V₂ dépend hiérarchiquement directement du flux d'informations V₁ et se trouve donc au niveau 2 de la hiérarchie,
- les flux d'informations V₃ et V₅ dépendent hiérarchiquement directement du flux d'informations V₂ et se trouvent donc chacun au niveau 3 de la hiérarchie, et
- le flux d'informations V₄ dépend hiérarchiquement directement du flux d'informations V₃ et se trouve donc au niveau 4 de la hiérarchie.

Cette organisation hiérarchique définit plusieurs suites ordonnées par ordre croissant de niveaux de complétude. Par exemple, ici, cette organisation hiérarchique définit deux suites croissantes de niveaux de complétude, à savoir {V₁, V₂, V₅} et {V₁, V₂, V₃, V₄}. De manière à ce que l'indice i utilisé dans la suite de cette description corresponde au niveau hiérarchique du flux d'informations et donc à son niveau de complétude, dans chacune de ces suites ordonnées, on note Iᵢ le flux d'informations au niveau hiérarchique i.

De plus, pour simplifier, dans la suite de cette description, on décrit en détail le système et les procédés de conditionnement et de contrôle d'accès hiérarchique uniquement dans le cas particulier de la suite {V₁, V₂, V₃, V₄} que l'on note, ci-dessous, {I₁ à I₄}. Ce qui est décrit ci-dessous dans le cas particulier de la suite {V₁, V₂, V₃, V₄} est aisément transposable au cas de la suite {V₁, V₂, V₅} et à toutes suites ordonnées par niveau de complétude croissant de flux d'informations.

Lorsqu'un flux d'informations Iᵢ dépend hiérarchiquement, directement ou non, d'un autre flux d'informations, cela signifie que les informations Iᵢ ne peuvent pas être exploitées indépendamment des informations de niveau hiérarchique inférieur. A cet effet, le flux d'informations Iᵢ, pour i supérieur à 1, ne contient pas assez d'informations en lui-même pour permettre la construction d'un signal vidéo compréhensible et intelligible par un être humain lorsqu'il est joué par le dispositif multimédia 24 sans avoir recours à des informations contenues dans les flux d'informations I₁ à Iᵢ₋₁. Seul le flux d'informations I₁ contient assez d'informations pour être directement compréhensible et intelligible par un être humain lorsqu'il est joué seul par le dispositif 24.

Autrement dit, chaque flux d'informations Iᵢ, où i est strictement supérieur à 1, n'est pas complètement redondant avec les flux élémentaires d'informations de niveaux hiérarchiques inférieurs.

A titre d'exemple, on suppose ici que :
- le flux d'informations V₁ code un signal vidéo dont la résolution est suffisamment faible pour permettre l'affichage de cette vidéo sur un écran d'un téléphone mobile sans que ce téléphone mobile n'ait à effectuer aucun traitement visant à réduire la quantité d'informations à afficher tel que, par exemple, une quantification,
- le flux d'informations V₂ est propre à compléter le flux d'informations V₁ pour obtenir des images en simple définition, c'est-à-dire, par exemple, 625 lignes par image et au format 4/3,
- le flux d'informations V₅ complète les informations V₂ pour passer de la simple définition à la haute définition (plus de 1000 lignes par image) tout en maintenant un format d'image de 4/3,
- le flux d'informations V₃ complète le flux d'informations V₂ pour passer d'un format d'affichage 4/3 à un format d'affichage 16/9 tout en restant en simple définition, et
- le flux d'informations V₄ complète le flux d'informations V₃ pour passer du format d'affichage 16/9 en simple définition au format d'affichage 16/9 en haute définition.

Les formats 4/3 et 16/9 ainsi que les résolutions d'images « simple définition » et « haute définition » sont définis par les normes sur le codage des signaux vidéo.

On notera ici que les suites {V₁, V₂, V₅} et {V₁, V₂, V₃, V₄} sont organisées par qualité d'image croissante. Ainsi, le flux d'informations V₁ transporte le signal vidéo dont la qualité est la plus médiocre et qui, par conséquent, est susceptible d'être affiché par n'importe quel dispositif multimédia.

Ici, chaque flux élémentaire d'informations V₁ pour i compris entre 1 et 5 est embrouillé à l'aide d'un mot de contrôle CWᵢ différent des mots de contrôle utilisés pour embrouiller les autres flux élémentaires d'informations Vⱼ, où i est différent de i.

Ainsi, grâce à l'organisation hiérarchique représentée sur la figure 2, il est possible d'autoriser sélectivement le désembrouillage des flux élémentaires d'informations I₁ à Iᵢ tout en interdisant le désembrouillage des flux d'informations Iᵢ₊₁ à I₄. On remarquera cependant qu'étant donné que le flux d'informations élémentaires Iᵢ ne contient pas toutes les informations I₁ à Iᵢ₋₁, l'autorisation de désembrouiller le flux élémentaire d'informations Iᵢ doit nécessairement s'accompagner de l'autorisation de désembrouiller les flux d'informations I₁ à Iᵢ₋₁ pour permettre de présenter un programme multimédia compréhensible et intelligible par l'utilisateur.

Chaque mot de contrôle CWᵢ est communiqué par l'émetteur 4 au récepteur par l'intermédiaire d'un message ECMᵢ contenant un cryptogramme (CWᵢ)_{CEi} du mot de contrôle CWᵢ. Ainsi, dans ce mode de réalisation, il existe autant de messages ECMᵢ que de flux élémentaires d'informations embrouillées transmis.

Chaque flux élémentaire d'informations Iᵢ est transmis dans son propre canal élémentaire de données Cᵢ de l'émetteur 4 vers les récepteurs. Chaque canal élémentaire de données comporte un seul flux élémentaire d'informations. Dans la suite de cette description, on note Cᵢ le canal de données utilisé pour transmettre le flux élémentaire d'informations Iᵢ.

Ici, les flux élémentaires d'informations audio et alphanumériques n'étant pas organisés hiérarchiquement de manière à former une suite croissante de niveaux de complétude, leur transmission sera considérée comme conventionnelle et donc non décrite en détail par la suite.

La figure 3 représente un exemple d'organisation du flux d'informations multiplexées Fₘ transmis par l'émetteur 4. Cet exemple est inspiré du format des flux d'informations multiplexées conforme aux normes MPEG2-TS et DVB et certaines notations utilisées ici correspondent à celles de ces normes MPEG2 et DVB. Toutefois, le lecteur doit bien garder à l'esprit que l'exemple d'organisation du flux Fₘ donné en regard de la figure 3 n'est donné qu'à titre d'illustration et de nombreuses autres organisations sont possibles pour multiplexer dans un même flux d'informations différents flux élémentaires d'informations Iᵢ organisés de façon hiérarchique. Cet exemple est directement transposable dans le cadre des protocoles propres à TCP-IP tels RTP (Real Time Protocol) ou UDP pour la diffusion des flux d'informations en unicast comme en multicast, l'usage de Ismacryp pour le chiffrement des contenus et l'usage par exemple de SDP (Session Description Protocol) pour la description des flux élémentaires formant le programme multimédia selon leurs adresses au sens des protocoles cités.

La figure 3 représente seulement les parties du flux d'informations multiplexées pertinentes pour la description qui va suivre.

Ici, le flux d'informations est multiplexé temporellement. Ce flux d'informations multiplexées est donc constitué d'une succession temporelle de paquets. Chaque paquet comporte un identifiant PID de voie ou de canal. Sur la figure 3, les valeurs indiquées en hexadécimal correspondent à la valeur de l'identifiant PID de chacun des paquets représentés. La succession temporelle des paquets ayant le même identifiant PID forme un canal élémentaire de données. A titre d'exemple, tous les paquets du flux Fₘ ont la même longueur et comportent, par exemple, 188 octets.

L'identifiant PID0x00 identifie un canal élémentaire réservé pour la transmission d'une table PAT (Program Association Table). Cette table PAT associe à chaque programme multimédia diffusé, l'identifiant PID du canal élémentaire utilisé pour transmettre une table PMT (Program Map Table) associée à ce programme multimédia. Par exemple, dans le flux Fₘ, la table PAT associe l'identifiant PID0x80 au programme Pₐ.

Le canal élémentaire identifié par l'identifiant PID0x80 est uniquement utilisé pour transmettre la table PMT. La table PMT indique pour chaque type de données formant le programme multimédia quels sont les identifiants PID des canaux élémentaires sur lesquels sont transmis les flux d'informations correspondants. La table PMT indique également dans quels canaux élémentaires sont transmis les messages ECMᵢ associés à chacun des flux élémentaires d'informations.

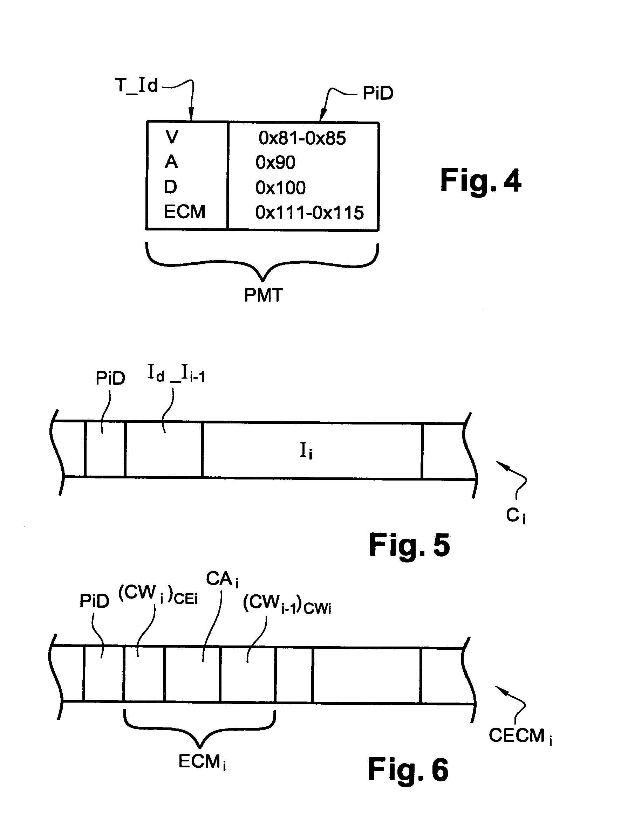

La figure 4 représente un exemple de table PMT susceptible d'être utilisée lors de la transmission du programme multimédia Pₐ. Cette table comporte une première colonne T-Id. La colonne T-Id comporte l'identifiant du type de données. Une seconde colonne PID indique la valeur de l'identifiant PID des canaux élémentaires utilisés pour transmettre les données du type considéré. Par exemple, sur la figure 4, la colonne T-Id comporte quatre identifiants V, A, D et ECM, correspondant respectivement aux types de données suivant : données vidéo, données audio, données alphanumériques et messages ECM. La colonne PID associe :
- les valeurs 0x81 à 0X85 au type de données vidéo,
- la valeur 0x90 au type de données audio,
- la valeur 0x100 au type de données alphanumériques, et
- les valeurs 0x111 à 0x115 aux messages ECM.

Plus précisément, la table PMT de la figure 4 indique que les canaux élémentaires C₁ à C₅ correspondent, respectivement, aux identifiants PIDOx81 à 0x85. De même, les canaux élémentaires utilisés pour transmettre les messages ECM₁ à ECM₅ correspondent, respectivement, aux PID 0x111 à 0x115.

On remarquera ici que puisque les données vidéo sont organisées en une hiérarchie de plusieurs flux élémentaires d'informations V₁ à V₅, l'identifiant Cᵢ de type de données vidéo est associé à autant de valeurs d'identifiants PID que de flux élémentaires d'informations vidéo V₁ à V₅. De façon similaire, étant donné que les flux d'informations élémentaires V₁ à V₅ sont embrouillés avec des mots de contrôle respectifs CW₁ à CW₅, l'identifiant du type de données ECM est associé à autant de valeurs d'identifiants PID que de flux élémentaires d'informations embrouillées avec des mots de contrôle différents.

Chaque paquet du flux Fₘ comprend également un numéro d'ordre qui définit la position temporelle de ce paquet par rapport aux autres paquets reçus par l'intermédiaire du même canal. De plus, la position de chaque paquet dans le flux Fₘ par rapport aux autres paquets des autres canaux définit la relation temporelle qu'il existe entre les informations transmises dans chacun de ces paquets. Par exemple, sur la figure 3, les paquets des canaux C₁ à C₄ qui se trouvent les uns à côté des autres dans le flux Fₘ transportent les informations I₁ à I₄ destinées à être jouées en même temps par le dispositif 24. Ainsi, par ce biais là, les flux élémentaires d'informations I₁ à I₄ sont synchronisés temporellement entre eux.

Sur la figure 3, les canaux élémentaires utilisés pour transmettre les flux d'informations audio A₁ et alphanumériques D₁ sont notés CA₁ et CD₁.

Chaque canal élémentaire utilisé pour transmettre le message ECMᵢ est noté CECMᵢ. La position des différents paquets des canaux CA₁, CD₁ et CECMᵢ par rapport aux paquets des canaux Cᵢ dans le flux Fₘ définit une relation temporelle entre les informations audio A₁, alphanumériques D₁, les messages ECMᵢ et les informations Iᵢ. Ainsi, il est possible de déterminer, à chaque instant, quels sont les messages ECMᵢ à utiliser pour désembrouiller les informations Iᵢ et les informations audio A₁, alphanumériques D₁ à jouer en même temps.

Les paquets de chaque canal élémentaire se succèdent, par exemple, à intervalles de temps réguliers dans le flux Fₘ.

La figure 5 représente un exemple de l'architecture d'un paquet du canal Cᵢ. Ce paquet comporte l'identifiant PID et l'information Iᵢ embrouillée à l'aide du mot de contrôle CWᵢ. De plus, ici, chaque paquet comporte un identifiant Id-Iᵢ₋₁ indiquant la position hiérarchique de l'information Iᵢ par rapport aux autres informations Iⱼ, où i est différent de i. Par exemple, l'identifiant Id-Iᵢ₋₁ est égal à l'identifiant PID du canal Cᵢ₋₁ utilisé pour transmettre le flux élémentaire d'informations Iᵢ₋₁ que complète directement le flux élémentaire d'informations Iᵢ. Lorsque l'indice i est égal à 1, c'est-à-dire que l'information Iᵢ est en bas de hiérarchie, l'identifiant Id-Iᵢ₋₁ prend une valeur prédéterminée tel que, par exemple, zéro. Ainsi, grâce à ces identifiants Id-Iᵢ₋₁ chaque récepteur est capable de reconstruire la hiérarchie des flux élémentaires d'informations Iᵢ représentée sur la figure 2.

La figure 6 représente un exemple d'architecture pour un paquet du canal CECMᵢ. Ce paquet comporte l'identifiant PID du canal CECMᵢ ainsi que les différents champs formant le message ECMᵢ. Ici, seuls les champs du message ECMᵢ nécessaires à la compréhension de la suite de la description sont représentés. Le message ECMᵢ comprend :
- un premier cryptogramme (CWᵢ)_{CEi} obtenu en chiffrant le mot de contrôle CWᵢ à l'aide de la clé d'exploitation CEᵢ,
- des conditions d'accès CAᵢ destinées à être comparées aux titres d'accès TA préalablement enregistrés dans le processeur de sécurité afin d'autoriser ou au contraire d'interdire l'accès au programme multimédia par le récepteur, et
- un second cryptogramme (CWᵢ₋₁)_{CWi} obtenu en chiffrant le mot de contrôle CWᵢ₋₁ à l'aide du mot de contrôle CWᵢ.

Le cryptogramme (CWᵢ₋₁)_{CWi} existe uniquement dans les messages ECMᵢ, où i est strictement supérieur à 1.

Le fonctionnement du système 2 va maintenant être décrit en regard du procédé de la figure 7.

Le procédé de la figure 7 comprend une phase 70 de conditionnement de l'accès aux flux élémentaires d'informations I₁ à I₄ et d'émission de ces flux, suivie d'une phase 72 de réception et de contrôle de l'accès, par chaque récepteur, aux flux élémentaires d'informations I₁ à I₄ transmis.

Lors de la phase 70, les informations Iⱼ sont traitées par ordre croissant d'indice i.

La phase 70 débute par une étape 80 de réception du paquet d'informations Iᵢ à transmettre. Ensuite, lors d'une étape 82, l'émetteur 4 génère un mot de contrôle CWᵢ.

Lors d'une étape 84, l'embrouilleur 10 embrouille le paquet d'informations Iᵢ à l'aide du mot de contrôle CWᵢ.

Lors d'une étape 86, le générateur 12 chiffre le mot de contrôle CWᵢ avec la clé d'exploitation CEᵢ pour obtenir le cryptogramme (CWᵢ)_{CEi}.

Si l'indice i est strictement supérieur à 1, lors d'une étape 88, le générateur 12 chiffre également le mot de contrôle CWᵢ₋₁ avec une clé Kᵢ₋₁ de manière à obtenir un second cryptogramme (CWᵢ₋₁)_{Ki-1} du mot de contrôle CWᵢ₋₁. La clé Kᵢ₋₁ est indépendante des clés d'exploitation CE₁ à CEᵢ₋₂. De préférence, la clé Kᵢ₋₁ est obtenue à partir d'informations contenues dans le message ECMᵢ en cours de génération. Par exemple, ici, la clé Kᵢ₋₁ est choisie égale au mot de contrôle CWᵢ. Le second cryptogramme (CWᵢ₋₁)_{Ki-1} est donc noté par la suite (CWᵢ₋₁)_{CWi}.

Si l'indice i est égal à 1, la valeur 0x00 est inscrite dans le champ prévu pour recevoir le cryptogramme (CWᵢ₋₁)_{CWi}.

Lors d'une étape 90, le générateur 12 génère le message ECMᵢ. Ce message ECMᵢ contient donc en particulier, les conditions d'accès CAᵢ, le cryptogramme (CWᵢ)_{CEi} et le cryptogramme (CWᵢ₋₁)_{CWi}. Les opérations 80 à 90 sont réitérées pour i allant de 1 à 4. Ces étapes sont également exécutées pour embrouiller les informations V₅, A₁ et D₁ et pour générer les messages ECM correspondants.

Ensuite, lors d'une étape 92, le multiplexeur 14 multiplexe les différents paquets d'informations embrouillés, et les messages ECMᵢ pour créer le flux Fₘ d'informations multiplexées décrit en regard de la figure 3.

Lors d'une étape 94, le flux Fₘ est diffusé vers l'ensemble des récepteurs du système 2 par l'intermédiaire du réseau 6.

La phase 72 débute par une étape 100 de réception du flux Fₘ diffusé par l'émetteur 4.

Ensuite, lors d'une étape 102, le démultiplexeur 39 démultiplexe les différents canaux élémentaires du flux Fₘ. Lors d'une étape 104, le démultiplexeur 39 transmet les flux élémentaires d'informations I₁ à I₄, V₅, A₁ et D₁ à l'unité de désembrouillage 36. En parallèle, lors d'une étape 106, le démultiplexeur 39 transmet les messages ECMᵢ contenus dans les canaux CECMᵢ au processeur de sécurité 38.

Ensuite, dans l'ordre décroissant des indices i, lors d'une étape 108, le processeur de sécurité 38 compare les conditions d'accès CAᵢ aux titres d'accès TA préalablement enregistrés. Donc, dans l'exemple décrit ici, le processeur de sécurité 38 commence par comparer les conditions d'accès CA₄ aux titres d'accès TA.

Si les conditions d'accès CA₄ ne correspondent pas aux titres d'accès TA, alors, lors d'une étape 110, le processeur de sécurité 38 rend le désembrouillage des informations I₄ impossible. Par exemple, lors de l'étape 110, le processeur de sécurité 38 inhibe le déchiffrement du cryptogramme (CW₄)_{CE4}. Après l'étape 110, le procédé retourne à l'étape 108. Lors de la nouvelle génération de l'étape 108, le processeur de sécurité 38 réitère les mêmes comparaisons que précédemment mais pour l'indice i-1. Ainsi, lors de la nouvelle itération de l'étape 108, le processeur de sécurité 38 compare les conditions CA₃ aux titres d'accès TA.

Tant qu'aucune des conditions d'accès reçues CAᵢ ne correspondent aux titres d'accès TA, alors l'étape 108 est réitérée jusqu'à comparer les conditions d'accès CA₁ aux titres d'accès TA. Si les conditions d'accès CA₁ ne correspondent pas aux titres d'accès TA, alors l'étape 110 est exécutée puis la phase 72 s'interrompt. En effet, cela signifie que ce récepteur n'est pas autorisé à désembrouiller le programme multimédia Pₐ.

Si, lors de l'étape 108, le processeur de sécurité 38 établit que les conditions d'accès CAₖ reçues correspondent aux titres d'accès TA préalablement enregistrés dans la mémoire 44, alors, le processeur de sécurité 38 procède à une étape 114 de déchiffrement du cryptogramme (CWₖ)_{CEk} à l'aide de la clé d'exploitation CEₖ préalablement enregistrée dans sa mémoire 44. Ici, on note donc k la plus grande valeur de l'indice i pour laquelle les conditions d'accès CAᵢ correspondent aux titres d'accès TA.

Ensuite, lors d'une étape 116, si k est strictement supérieur à 1, le processeur de sécurité 38 déchiffre le second cryptogramme (CWₖ₋₁)_{Kk-1} contenu dans le message ECMₖ afin d'obtenir un mot de contrôle CWₖ₋₁. En l'occurrence, dans ce mode de réalisation, lors de l'étape 116, le processeur de sécurité 38 déchiffre le cryptogramme (CWₖ₋₁)_{CWk} à l'aide du mot de contrôle CWₖ obtenu à l'issue de l'étape 114.

Ensuite, lors d'une étape 118, les seconds cryptogrammes(CW₁)_{K1} à (CWₖ₂)_{Kk-2} contenus, respectivement, dans les messages ECM₂ à ECMₖ₋₁ sont déchiffrés de proche en proche dans l'ordre décroissant de leurs indices.

Une fois l'ensemble des mots de contrôle CW₁ à CWₖ obtenus, ceux-ci sont transmis, lors d'une étape 120, à l'unité de désembrouillage 36.

Lors d'une étape 122, l'unité de désembrouillage 36 désembrouille les flux élémentaires d'informations I₁ à Iₖ à l'aide, respectivement, des mots de contrôle CW₁ à CWₖ.

Les flux élémentaires d'informations I₁ à Iₖ désembrouillés par l'unité de désembrouillage 36 sont alors transmis au décodeur 30 lors d'une étape 124.

En réponse, lors d'une étape 126, le décodeur 30 combine entre eux les flux d'informations désembrouillés I₁ à Iₖ pour produire le signal vidéo construit à l'aide des informations contenues dans chacun de ces flux élémentaires d'informations désembrouillés. Enfin, lors d'une étape 128, le dispositif multimédia 24 présente sous la forme d'images directement compréhensibles et intelligibles par un être humain, le signal vidéo reçu du décodeur 30.

Les étapes 80 à 128 sont réitérées en boucle.

On remarquera que lors de la phase 72, l'obtention des mots de contrôle CW₁ à CWₖ₋ᵢ ne nécessite pas la comparaison des conditions d'accès CA₁ à CAₖ₋₁ aux titres d'accès préalablement enregistrés TA.

La figure 8 représente un autre mode de réalisation du procédé de la figure 7. Le procédé de la figure 8 est identique au procédé de la figure 7 à l'exception que :
- l'étape 88 est remplacée par une étape 140, lors de laquelle le mot de contrôle CWᵢ₋₁ est chiffré à l'aide du mot de contrôle CWᵢ et les mots de contrôle CW₁ à CWᵢ₋₂ sont chiffrés à l'aide, respectivement, des mots de contrôle CW₂ à CWᵢ₋₁,
- l'étape 90 est remplacée par une étape 142 lors de laquelle le message ECMᵢ généré comporte en plus du cryptogramme (CWᵢ₋₁)_{CWi} les cryptogrammes (CW₁)_{CW2} à (CWᵢ₋₂)_{CWi-1}, et
- les étapes 116 et 118 sont remplacées par une étape 146 de déchiffrement de proche en proche de l'ensemble des seconds cryptogrammes (CWᵢ₋₁)_{CWi} contenus dans le même message ECMᵢ de manière à obtenir les mots de contrôle CW₁ à CWᵢ₋₁.

Dans le procédé de la figure 8, l'ensemble des seconds cryptogrammes nécessaires à la visualisation du programme multimédia avec un niveau de complétude donné sont contenus dans le même message ECMᵢ. Il n'est donc plus nécessaire de transmettre au processeur de sécurité 38 les messages ECM₁ à ECMᵢ₋₁.

De nombreux autres modes de réalisation sont possibles. Par exemple, l'organisation hiérarchique des flux élémentaires d'informations n'est pas limitée à quatre niveaux de complétude. En fait, ce qui a été décrit précédemment s'applique dès qu'il y a plus de deux niveaux de complétude. Toutefois, de préférence, les procédés de conditionnement et de contrôle d'accès décrits ci-dessus s'appliquent au cas où il existe au moins une suite de trois niveaux successifs de complétude.

Ce qui a été décrit ci-dessus s'applique également à d'autres types de données que les données vidéo. En particulier, il est possible d'adapter les procédés des figures 7 et 8 aux cas des données audio ou alphanumériques ou d'autres types de données à partir du moment où celles-ci se présentent sous la forme d'une ou plusieurs suites de flux élémentaires ordonnés par niveau de complétude croissant. Ce qui a été décrit ci-dessus s'applique également aux cas où plusieurs programmes multimédias embrouillés hiérarchiquement sont multiplexés dans le même flux d'informations.

Les clés Kᵢ utilisées pour obtenir les seconds cryptogrammes (CWᵢ)_{Ki} peuvent également être toutes identiques et, par exemple, prises égales soit à la clé d'exploitation CEₖ, soit au mot de contrôle CWₖ.

Ici, le conditionnement et le contrôle d'accès hiérarchiques ont été décrits dans le cas particulier où les messages ECMᵢ sont transmis par des canaux élémentaires différents. Toutefois, en variante, l'ensemble des messages ECMᵢ peuvent être transmis aux récepteurs par l'intermédiaire d'un seul et même canal élémentaire dédié à cet usage.

Ici, l'organisation hiérarchique du programme multimédia a été décrite dans le cas particulier où la qualité du signal vidéo obtenu augmente au fur et à mesure que l'indice i augmente. Toutefois, l'organisation hiérarchique du programme multimédia peut être basée sur d'autres critères. Par exemple, chaque flux d'informations complémentaires peut correspondre à un objet ou un personnage à ajouter dans une scène vidéo par rapport au niveau hiérarchique inférieur. On peut, par exemple, imaginer l'exemple suivant où le flux élémentaire d'informations I₁ code uniquement les informations nécessaires à la restitution d'un seul personnage. Le flux élémentaire d'informations complémentaires I₂ code uniquement l'arrière plan de la scène multimédia.

Enfin, le flux élémentaire d'informations complémentaires I₃ contient les informations nécessaires à l'ajout d'un second personnage ou à l'ajout d'un médaillon contenant du hors texte dans la scène multimédia.

## Revendications

1. Procédé de contrôle d'accès hiérarchique à un programme multimédia, ce programme multimédia étant formé d'au moins k flux élémentaires d'informations I₁ à Iₖ, où k est strictement supérieur à 1, ces flux élémentaires d'informations I₁ à Iₖ étant temporellement synchronisés les uns par rapport aux autres et hiérarchiquement organisés les uns par rapport aux autres de la façon suivante, de manière à correspondre à des niveaux de complétude ordonnés dudit programme multimédia :
- le flux élémentaire d'informations I₁ correspondant au niveau de complétude le plus bas et contenant des informations I₁ de type vidéo ou audio destinées à être utilisées par un dispositif multimédia, après désembrouillage, afin d'être rendues directement compréhensibles et intelligibles par un être humain, sans qu'il soit nécessaire d'y ajouter des informations I₂ à Iₖ, le flux élémentaire d'informations I₁ étant embrouillé avec un mot de contrôle CW₁,
- le flux élémentaire d'informations Iᵢ, pour i compris entre 2 et k, étant à un niveau de complétude i supérieur au niveau de complétude i-1 du flux élémentaire d'informations Iᵢ₋₁, le flux élémentaire d'informations Iᵢ contenant des informations Iᵢ, de même type que les informations Iᵢ₋₁, destinées à être utilisées par le dispositif multimédia, après désembrouillage, en même temps que les informations I₁ à Iᵢ₋₁ afin que la combinaison des informations I₁ à Iᵢ ainsi réalisée soit directement compréhensible et intelligible par un être humain, les informations Iᵢ complétant les informations Iᵢ₋₁ de sorte que les informations I₁ peuvent graduellement être complétées, dans l'ordre, par les informations I₂ et suivantes, ce qui rend possible l'utilisation par le dispositif multimédia du programme multimédia dans k niveaux différents de complétude, le niveau de complétude allant croissant au fur et à mesure que l'indice i croît, chaque flux élémentaire d'informations Iᵢ étant embrouillé avec un mot de contrôle CWᵢ différent des mots de contrôle CWⱼ, où j est différent de i,
ce procédé comportant :
- la réception (100) de messages ECMᵢ (Entitlement Control Message), où i est un nombre compris entre 1 et k, chaque message ECMᵢ contenant des conditions d'accès CAᵢ et un premier cryptogramme (CWᵢ)_{CEi} obtenu en chiffrant le mot de contrôle CWᵢ avec une clé d'exploitation CEᵢ,
- la transmission (106), au moins du message ECMₖ, à un processeur de sécurité,
- la comparaison (108), par le processeur de sécurité, des conditions d'accès CAₖ contenues dans le message ECMₖ, à des titres d'accès TA préalablement enregistrés dans le processeur de sécurité, et
- le déchiffrement (114), par le processeur de sécurité, du premier cryptogramme (CWₖ)_{CEk} contenu dans le message ECMₖ à l'aide de la clé d'exploitation CEₖ, uniquement si les conditions d'accès CAₖ correspondent aux titres d'accès TA, et, dans le cas contraire, l'interruption du traitement du message ECMₖ reçu,
**caractérisé en ce que** ce procédé comporte :
- la réception (100) et la transmission (106) au processeur de sécurité de seconds cryptogrammes, (CWᵢ)_{Ki} pour i compris entre 1 et k-1, obtenus en chiffrant les mots de contrôle CW₁ à CWₖ₋₁ avec des clés respectives K₁ à Kₖ₋₁ construites avec au moins une partie de l'ensemble formé des informations présentes dans l'ECMₖ et de la clé d'exploitation CEₖ,
- le déchiffrement (116, 118) des seconds cryptogrammes (CWᵢ)_{Ki} uniquement si les conditions d'accès CAₖ reçues dans le message ECMₖ correspondent aux titres d'accès TA, et sans comparer au préalable les conditions d'accès CAᵢ aux titres d'accès TA pour i compris entre 1 et k-1, et, dans le cas contraire,
- l'interdiction (110) du déchiffrement des seconds cryptogrammes (CWᵢ)_{Ki} si les conditions d'accès CAₖ ne correspondent pas aux titres d'accès TA.

2. Procédé selon la revendication 1, dans lequel le procédé comporte la construction (116) d'au moins l'une des clés Kᵢ, pour i compris entre 1 et k-1, à partir d'informations uniquement contenues dans le message ECMₖ, de sorte que si le traitement du message ECMₖ est interrompu car les conditions d'accès CAₖ ne correspondent pas aux titres d'accès TA, le déchiffrement d'au moins un des seconds cryptogrammes est rendu impossible.

3. Procédé selon la revendication 2, dans lequel le procédé comporte la construction (116) d'au moins l'une des clés Kᵢ à partir du mot de contrôle CWₖ obtenu après déchiffrement du premier cryptogramme (CWₖ)_{CEk} uniquement lorsque les conditions d'accès CAₖ correspondent aux titres d'accès TA.

4. Procédé selon la revendication 3, dans lequel le procédé comporte la construction (116) de la clé Kₖ₋₁ à partir du mot de contrôle CWₖ obtenu après déchiffrement du premier cryptogramme (CWₖ)_{CEk} uniquement lorsque les conditions d'accès CAₖ correspondent aux titres d'accès TA et la construction (118) de chaque clé Kᵢ, pour i strictement inférieur à k-1, à partir du mot de contrôle CWᵢ₊₁ obtenu après déchiffrement du second cryptogramme (CWᵢ₊₁)_{Ki+1}.

5. Procédé selon la revendication 4, dans lequel chaque message ECMᵢ reçu pour i compris entre 2 et k comporte le second cryptogramme (CWᵢ₋₁)_{Ki-1}, le procédé comportant le déchiffrement (118) de proche en proche des seconds cryptogrammes (CWⱼ)_{Kj}, pour j compris entre k-2 et 1, contenus respectivement dans les messages ECMₖ₋₁ à ECM₂.

6. Procédé selon la revendication 4, dans lequel le message ECMₖ comporte en outre les seconds cryptogrammes (CWᵢ)_{Ki} pour i compris entre 1 et k-1, le procédé comportant pour le message ECMₖ, en plus du déchiffrement du premier cryptogramme (CWₖ)_{CEk}, le déchiffrement (146) de proche en proche de l'ensemble des seconds cryptogrammes contenu dans ce message ECMₖ.

7. Procédé selon l'une quelconque des revendications précédentes, dans lequel chaque flux élémentaire d'informations Iᵢ, pour i strictement supérieur à 1, ne contient pas assez d'informations pour être directement compréhensible et intelligible par un être humain lorsqu'il est joué seul par le dispositif multimédia.

8. Procédé selon l'une quelconque des revendications précédentes, dans lequel chaque flux élémentaire d'informations I₁ à Iₖ est transporté par l'intermédiaire d'un canal respectif C₁ à Cₖ de données.

9. Procédé de conditionnement d'accès hiérarchique à un programme multimédia, ce programme multimédia étant formé d'au moins k flux élémentaires d'informations I₁ à Iₖ, où k est strictement supérieur à 1, ces flux élémentaires d'informations I₁ à Iₖ étant temporellement synchronisés les uns par rapport aux autres et hiérarchiquement organisés les uns par rapport aux autres de la façon suivante, de manière à correspondre à des niveaux de complétude ordonnés dudit programme multimédia :
- le flux élémentaire d'informations I₁ correspondant au niveau de complétude le plus bas et contenant des informations I₁ de type vidéo ou audio destinées à être utilisées par un dispositif multimédia, après désembrouillage, afin d'être rendues directement compréhensibles et intelligibles par un être humain, sans qu'il soit nécessaire d'y ajouter des informations I₂ à Iₖ,
- le flux élémentaire d'informations Iᵢ, pour i compris entre 2 et k, étant à un niveau de complétude i supérieur au niveau de complétude i-1 du flux élémentaire d'informations Iᵢ₋₁, et l'améliorant directement, le flux élémentaire d'informations Iᵢ contenant des informations Iᵢ de même type que les informations Iᵢ₋₁, destinées à être utilisées par le dispositif multimédia, après désembrouillage, avec les informations I₁ à Iᵢ₋₁ afin que la combinaison des informations I₁ à Iᵢ ainsi réalisée soit directement compréhensible et intelligible par un être humain, les informations Iᵢ complétant les informations Iᵢ₋₁ de sorte que les informations I₁ peuvent graduellement être complétées, dans l'ordre, par les informations I₂ et suivantes, ce qui rend possible l'utilisation par le dispositif multimédia du programme multimédia dans k niveaux différents de complétude, le niveau de complétude allant croissant au fur et à mesure que l'indice i croît,
ce procédé comportant :
- l'embrouillage des flux élémentaires d'informations I₁ à Iₖ respectivement avec des mots de contrôle CW₁ à CWₖ, chaque mot de contrôle CWᵢ étant différent des mots de contrôle CWⱼ, où i est différent de i,
- la construction et la transmission de messages ECMᵢ, où i est un nombre entier compris entre 1 et k, chaque message ECMᵢ contenant des conditions d'accès CAᵢ et un premier cryptogramme (CWᵢ)_{CEi} obtenu en chiffrant le mot de contrôle CWᵢ avec une clé d'exploitation CEᵢ,
**caractérisé en ce que** ce procédé comporte :
- la construction et la transmission de seconds cryptogrammes ,(CWᵢ)_{Ki} pour i compris entre 1 et k-1, obtenus en chiffrant les mêmes mots de contrôle CW₁ à CWₖ₋₁ avec des clés respectives K₁ à Kₖ₋₁ construites avec au moins une partie de l'ensemble formé des informations présentes dans l'ECMₖ et de la clé d'exploitation CEₖ.

10. Processeur de sécurité pour la mise en oeuvre d'un procédé de contrôle d'accès hiérarchique conforme à l'une quelconque des revendications 1 à 6, ce processeur de sécurité comprenant une mémoire stockant des titres d'accès TA préalablement enregistrés et au moins une clé d'exploitation CEₖ, ainsi que :
- des moyens pour comparer les conditions d'accès CAₖ contenus dans un message ECMₖ reçu à des titres d'accès TA préalablement enregistrés dans la mémoire de ce processeur de sécurité, et
- des moyens pour déchiffrer le premier cryptogramme (CWₖ)_{CEk} contenu dans le message ECMₖ à l'aide de la clé d'exploitation CEₖ uniquement si les conditions d'accès CAₖ correspondent aux titres d'accès TA et, dans le cas contraire, à interrompre le traitement du message ECMₖ,
**caractérisé en ce que** le processeur de sécurité comprend également :
- des moyens pour recevoir (100) des seconds cryptogrammes, (CWᵢ)_{Ki} pour i compris entre 1 et k-1, obtenus en chiffrant les mots de contrôle CW₁ à CWₖ₋₁ avec des clés respectives K₁ à Kₖ₋₁ construites avec au moins une partie de l'ensemble formé des informations présentes dans le message ECMₖ et de la clé d'exploitation CEₖ,
- des moyens pour déchiffrer (116, 118) les seconds cryptogrammes (CWᵢ)_{Ki} uniquement si les conditions d'accès CAₖ reçus dans le message ECMₖ correspondent aux titres d'accès TA, et sans comparer au préalable les conditions d'accès CAᵢ aux titres d'accès TA pour i strictement inférieur à k, et, dans le cas contraire,
- des moyens pour interdire (110) le déchiffrement des seconds cryptogrammes (CWᵢ)_{Ki} si les conditions d'accès CAₖ ne correspondent pas aux titres d'accès TA.

11. Emetteur de programmes multimédias embrouillés hiérarchiquement, ces programmes multimédias étant formé d'au moins k flux élémentaires d'informations I₁ à Iₖ, où k est strictement supérieur à 1, ces flux élémentaires d'informations I₁ à Iₖ étant temporellement synchronisés les uns par rapport aux autres et hiérarchiquement organisés les uns par rapport aux autres de la façon suivante, de manière à correspondre à des niveaux de complétude ordonnés desdits programmes multimédias :
- le flux élémentaire d'informations I₁ correspondant au niveau de complétude le plus bas et contient des informations I₁ de type vidéo ou audio destinées à être utilisées par un dispositif multimédia, après désembrouillage, afin d'être rendues directement compréhensibles et intelligibles par un être humain, sans qu'il soit nécessaire d'y ajouter des informations I₂ à Iₖ, le flux élémentaire d'informations I₁ étant embrouillé avec un mot de contrôle CW₁,
- le flux élémentaire d'informations Iᵢ, pour i compris entre 2 et k, étant à un niveau de complétude i supérieur au niveau de complétude i-1 du flux élémentaire d'informations Iᵢ₋₁, et l'améliorant directement, le flux élémentaire d'informations Iᵢ contenant des informations Iᵢ, de même type que les informations Iᵢ₋₁, destinées à être utilisées par le dispositif multimédia, après désembrouillage, en même temps que les informations I₁ à Iᵢ₋₁ afin que la combinaison des informations I₁ à Iᵢ ainsi réalisée soit directement compréhensible et intelligible par un être humain, les informations Iᵢ complétant les informations Iᵢ₋₁ de sorte que les informations I₁ peuvent graduellement être complétées, dans l'ordre, par les informations I₂ et suivantes, ce qui rend possible l'utilisation par le dispositif multimédia du programme multimédia dans k niveaux différents de complétude, le niveau de complétude allant croissant au fur et à mesure que l'indice i croît, chaque flux élémentaire d'informations Iᵢ étant embrouillé avec un mot de contrôle CWᵢ différent des mots de contrôle CWⱼ, où i est différent de i, cet émetteur comprenant :
- un embrouilleur propre à embrouiller les flux élémentaires d'informations I₁ à Iₖ respectivement avec des mots de contrôle CW₁ à CWₖ, chaque mot de contrôle CWᵢ étant différent des mots de contrôle CWⱼ, où j est différent de i,
- un générateur de messages ECMᵢ, où i est un nombre entier compris entre 1 et k, chaque message ECMᵢ contenant des conditions d'accès CAᵢ et un premier cryptogramme (CWᵢ)_{CEi} obtenu en chiffrant le mot de contrôle CWᵢ avec une clé d'exploitation CEᵢ,
**caractérisé en ce que** cet émetteur est apte à construire et à diffuser des seconds cryptogrammes (CWᵢ)_{Ki} pour i compris entre 1 et k-1, obtenus en chiffrant les mêmes mots de contrôle CW₁ à CWₖ₋₁ avec des clés respectives K₁ à Kₖ₋₁ construites avec au moins une partie de l'ensemble formé des informations présentes dans l'ECMₖ et de la clé d'exploitation CEₖ.

## Patentansprüche

1. Verfahren zum Steuern des hierarchischen Zugriffs auf ein Multimedia-Programm, wobei das Multimedia-Programm aus mindestens k elementaren Informationsflüssen I₁ bis Iₖ gebildet ist, wobei k streng größer 1 ist, wobei die elementaren Informationsflüsse I₁ bis Iₖ bezüglich einander zeitlich synchronisiert sind und bezüglich einander auf folgende Art hierarchisch organisiert sind, auf die Weise, dass sie von dem Multimediaprogramm angeordneten Vollständigkeitsstufen entsprechen:
- wobei der elementare Informationsfluss I₁ der niedrigsten Vollständigkeitsstufe entspricht und Informationen I₁ vom Typ Video oder Audio aufweist, die dazu vorgesehen sind, von einer Multimedia-Vorrichtung nach Entspreizung verwendet zu werden, so dass sie direkt für ein menschliches Wesen nachvollziehbar und verständlich sind, ohne dass es nötig ist, ihnen Informationen I₂ bis Iₖ hinzuzufügen, wobei der elementare Informationsfluss I₁ mit einem Steuerwort CW₁ gespreizt ist,
- wobei der elementare Informationsfluss Iᵢ, für i zwischen 2 und k, auf einer Vollständigkeitsstufe i ist, die über der Vollständigkeitsstufe i-1 des elementaren Informationsflusses Iᵢ₋₁ ist, wobei der elementare Informationsfluss Iᵢ Informationen Iᵢ vom selben Typ wie die Informationen Iᵢ₋₁ enthält, die dazu vorgesehen sind, von der Multimediavorrichtung nach Entspreizung zur gleichen Zeit wie die Informationen I₁ bis Iᵢ₋₁ verwendet zu werden, so dass die so erzielte Kombination der Informationen I₁ bis Iᵢ direkt für ein menschliches Wesen nachvollziehbar und verständlich ist, wobei die Informationen Iᵢ die Information Iᵢ₋₁ auf die Art vervollständigen, dass die Informationen I₁ schrittweise der Reihe nach mit den Informationen I₂ und den folgenden vervollständigt werden können, was die Verwendung des Multimediaprogramms durch die Multimediavorrichtung auf k unterschiedlichen Vollständigkeitsstufen ermöglicht, wobei die Vollständigkeitsstufe in dem Maße zunimmt, wie der Index i zunimmt, wobei jeder elementare Informationsfluss Iᵢ mit einem Steuerwort CWᵢ, das unterschiedlich ist von den Steuerworten CWⱼ, wobei j unterschiedlich von i ist, gespreizt ist,
wobei das Verfahren aufweist:
- den Empfang (100) von ECMᵢ(Entitlement Control Message)-Nachrichten, wobei i eine Zahl zwischen 1 und k ist, wobei jede ECMᵢ-Nachricht Zugriffsbedingungen CAᵢ und ein erstes Kryptogramm (CWi)_{CEi}, erhalten durch Verschlüsseln des Steuerworts CWᵢ mit einem Nutzungsschlüssel CEᵢ, aufweist
- die Übertragung (106) mindestens der Nachricht ECMₖ an einen Sicherheitsprozessor,
- den Vergleich (108) durch den Sicherheitsprozessor der in der Nachricht ECMₖ enthaltenen Zugriffsbedingungen CAₖ mit im dem Sicherheitsprozessor vorgespeicherten Zugriffsrechten und
- die Entschlüsselung (114) des in der Nachricht ECMₖ enthaltenen ersten Kryptogramms (CWₖ)_{CEk} mit Hilfe des Nutzungsschlüssels CEₖ durch den Sicherheitsprozessor, einzig wenn die Zugriffsbedingungen CAₖ den Zugriffsrechten TA entsprechen und, im gegenteiligen Fall, die Unterbrechung der Verarbeitung der empfangenen Nachricht ECMₖ,
dadurch charakterisiert, dass das Verfahren aufweist:
- den Empfang (100) und die Übertragung (106), an den Sicherheitsprozessor, von zweiten Kryptogrammen (CWᵢ)_{Ki} für i zwischen 1 und k-1, erhalten durch Verschlüsseln der Steuerworte CW₁ bis CWₖ₋₁ mit jeweiligen Schlüsseln K₁ bis Kₖ₋₁, konstruiert mit mindestens einem Teil der Menge gebildet aus den Informationen, die in der ECMₖ enthalten sind, und dem Nutzungsschlüssel CEₖ,
- die Entschlüsselung (116, 118) der zweiten Kryptogramme (CWᵢ)_{Ki}, einzig wenn die in der Nachricht ECMₖ empfangenen Zugriffsbedingungen CAₖ den Zugriffsrechten TA entsprechen und ohne vorher die Zugriffsbedingungen CAᵢ mit den Zugriffsrechten TA für i zwischen 1 und k-1 zu vergleichen und, im gegenteiligen Fall,
- das Verbot (110) der Entschlüsselung der zweiten Kryptogramme (CWᵢ)Kᵢ, wenn die Zugriffsbedingungen CAₖ nicht den Zugriffsrechten TA entsprechen.

2. Verfahren gemäß Anspruch 1, in dem das Verfahren die Konstruktion (116) mindestens eines der Schlüssel Kᵢ, für i zwischen 1 und k-1, ausgehend von Informationen, die einzig in der Nachricht ECMₖ enthalten sind, aufweist, der Art, dass, wenn die Verarbeitung der Nachricht ECMₖ unterbrochen wird, da die Zugriffsbedingungen CAₖ nicht den Zugriffsrechten TA entsprechen, die Entschlüsselung mindestens eines der zweiten Kryptogramme unmöglich gemacht ist.

3. Verfahren gemäß Anspruch 2, in dem das Verfahren die Konstruktion (116) mindestens eines der Schlüssel Kᵢ ausgehend von dem Steuerwort CWₖ, erhalten nach Entschlüsseln des ersten Kryptogramms (CWₖ)_{CEk}, einzig wenn die Zugriffsbedingungen CAₖ den Zugriffsrechten TA entsprechen, aufweist.

4. Verfahren gemäß Anspruch 3, in dem das Verfahren die Konstruktion (116) des Schlüssels Kₖ₋₁ ausgehend von dem Steuerwort CWₖ, erhalten nach Entschlüsselung des ersten Kryptogramm (CWₖ)_{CEk}, einzig, wenn die Zugriffsbedingungen CAₖ den Zugriffsrechten TA entsprechend und die Konstruktion (118) jedes Schlüssels Kᵢ, für i streng kleiner k-1, ausgehend von dem Steuerwort CWᵢ₊₁, erhalten nach Entschlüsselung des zweiten Kryptogramms (CWᵢ₊₁)Kᵢ₊₁, aufweist.

5. Verfahren gemäß Anspruch 4, in dem jede empfangene Nachricht ECMᵢ für i zwischen 2 und k das zweite Kryptogramm (CWᵢ₋₁)_{Ki-1} enthält, wobei das Verfahren die sukzessive Entschlüsselung (118) der in den Nachrichten ECMₖ₋₁ bis ECM₂ jeweils enthaltenen zweiten Kryptogramme (CWⱼ)_{Kj}, für j zwischen k-2 und 1, aufweist.

6. Verfahren gemäß Anspruch 4, in dem die Nachricht ECMₖ außerdem die zweiten Krytogramme (CWᵢ)_{Ki} für i zwischen 1 und k-1 aufweist, wobei das Verfahren für die Nachricht ECMₖ, zusätzlich zu der Entschlüsselung des ersten Kryptogramms (CWₖ)_{CEk} die sukzessive Entschlüsselung (146) der Menge von in dieser Nachricht ECMₖ enthaltenen Kryptogramme aufweist.

7. Verfahren gemäß einem der vorhergehenden Ansprüche, in dem jeder elementare Informationsfluss Iᵢ, für i streng größer als 1, nicht genug Informationen enthält, um für ein menschliches Wesen direkt nachvollziehbar und verständlich zu sein, wenn er allein durch die Multimedia-Vorrichtung abgespielt wird.

8. Verfahren gemäß einem der vorhergehenden Ansprüche, in dem jeder elementare Informationsfluss I₁ bis Iₖ mittels eines jeweiligen Datenkanals C₁ bis Cₖ transportiert wird.

9. Verfahren zum Konditionieren des hierarchischen Zugriffs auf ein Multimedia-Programm, wobei das Multimedia-Programm aus mindestens k elementaren Informationsflüssen I₁ bis Iₖ gebildet ist, wobei k streng größer 1 ist, wobei die elementaren Informationsflüsse I₁ bis Iₖ bezüglich einander zeitlich synchronisiert sind und bezüglich einander auf folgende Art hierarchisch organisiert sind, auf die Weise, dass sie von dem Multimediaprogramm angeordneten Vollständigkeitsstufen entsprechen:
- wobei der elementare Informationsfluss I₁ der niedrigsten Vollständigkeitsstufe entspricht und Informationen I₁ vom Typ Video oder Audio aufweist, die dazu vorgesehen sind, von einer Multimedia-Vorrichtung nach Entspreizen verwendet zu werden, so dass sie direkt für ein menschliches Wesen nachvollziehbar und verständlich sind, ohne dass es nötig ist, ihnen Informationen I₂ bis Iₖ hinzuzufügen,
- wobei der elementare Informationsfluss Iᵢ, für i zwischen 2 und k, auf einer Vollständigkeitsstufe i ist, die über der Vollständigkeitsstufe i-1 des elementaren Informationsflusses Iᵢ₋₁ ist und ihn direkt verbessert, wobei der elementare Informationsfluss Iᵢ Informationen Iᵢ vom selben Typ wie die Informationen Iᵢ₋₁ enthält, die dazu vorgesehen sind, von der Multimediavorrichtung nach Entspreizung mit den Informationen I₁ bis Iᵢ₋₁ verwendet zu werden, so dass die so erzielte Kombination der Informationen I₁ bis Iᵢ direkt für ein menschliches Wesen nachvollziehbar und verständlich ist, wobei die Informationen Iᵢ die Information Iᵢ₋₁ auf die Art vervollständigen, dass die Informationen I₁ schrittweise der Reihe nach mit den Informationen I₂ und den folgenden vervollständigt werden können, was die Verwendung des Multimediaprogramms durch die Multimediavorrichtung auf k unterschiedlichen Vollständigkeitsstufen ermöglicht, wobei die Vollständigkeitsstufe in dem Maße zunimmt, wie der Index i zunimmt,
wobei das Verfahren aufweist:
- die Spreizung der elementaren Informationsflüsse I₁ bis Iₖ jeweils mit Steuerworten CW₁ bis CWₖ, wobei jedes Steuerwort CWᵢ unterschiedlich von den Steuerworten CWⱼ ist, wobei j unterschiedlich von i ist,
- die Konstruktion und die Übertragung von ECMᵢ-Nachrichten, wobei i eine ganze Zahl zwischen 1 und k ist, wobei jede ECMᵢ-Nachricht Zugriffsbedingungen CAᵢ und ein erstes Kryptogramm (CWᵢ)_{CEi}, erhalten durch Verschlüsseln des Steuerworts CWᵢ mit einem Nutzungsschlüssel CEᵢ, aufweist, dadurch charakterisiert, dass das Verfahren aufweist:
- die Konstruktion und die Übertragung (106) von zweiten Kryptogrammen (CWᵢ)_{Ki} für i zwischen 1 und k-1, erhalten durch Verschlüsseln der Steuerworte CW₁ bis CWₖ₋₁ mit jeweiligen Schlüsseln K₁ bis Kₖ₋₁, erzeugt mit mindestens einem Teil der Menge gebildet aus den Informationen, die in der ECMₖ enthalten sind, und dem Nutzungsschlüssel CEₖ.

10. Sicherheitsprozessor zum Ausführen eines Verfahrens zum Steuern des hierarchischen Zugriffs gemäß einem der Ansprüche 1 bis 6, wobei der Sicherheitsprozessor einen Speicher aufweist, der vorgespeicherte Zugriffsrechte und mindestens einen Nutzungsschlüssel CEₖ speichert, sowie:
- Mittel zum Vergleichen der in einer empfangenen ECMₖ-Nachricht enthaltenen Zugriffsbedingungen CAₖ mit vorab in dem Speicher des Sicherheitsprozessors gespeicherten Zugriffsrechten TA und
- Mittel zum Entschlüsseln des in der ECMₖ-Nachricht enthaltenen ersten Kryptogramms (CWₖ)_{CEk} mit Hilfe des Nutzungsschlüssels CEₖ einzig wenn die Zugriffsbedingungen CAₖ den Zugriffsrechten TA entsprechen und, im gegenteiligen Fall, zum Unterbrechen der Verarbeitung der ECMₖ-Nachricht, dadurch charakterisiert, dass der Sicherheitsprozessor auch aufweist:
- Mittel zum Empfangen (100) von zweiten Kryptogrammen (CWᵢ)_{Ki} für i zwischen 1 und k-1, erhalten durch Verschlüsseln der Steuerworte CW₁ bis CWₖ₋₁ mit jeweiligen Schlüsseln K₁ bis Kₖ₋₁, konstruiert mit mindestens einem der Teil der Menge gebildet aus den in der Nachricht ECMₖ vorhandenen Informationen und dem Nutzungsschlüssel CEₖ,
- Mittel zum Entschlüsseln (116, 118) der zweiten Kryptogramme (CWᵢ)_{Ki} einzig wenn die in der Nachricht ECMₖ empfangenen Zugriffsbedingungen CAₖ den Zugriffsrechten TA entsprechen und ohne vorher die Zugriffsbedingungen CAᵢ mit den Zugriffsrechten TA für i zwischen 1 und k-1 zu vergleichen und, im gegenteiligen Fall,
- Mittel zum Verbieten (110) der Entschlüsselung der zweiten Kryptogramme (CWᵢ)_{Ki}, wenn die Zugriffsbedingungen CAₖ nicht den Zugriffsrechten TA entsprechen.

11. Sender von hierarchisch gespreizten Multimedia-Programmen, wobei die Multimedia-Programme aus mindestens k elementaren Informationsflüssen I₁ bis Iₖ gebildet sind, wobei k streng größer 1 ist, wobei die elementaren Informationsflüsse I₁ bis Iₖ bezüglich einander zeitlich synchronisiert sind und bezüglich einander auf folgende Art hierarchisch organisiert sind, auf die Weise, dass sie von den Multimediaprogrammen angeordneten Vollständigkeitsstufen entsprechen:
- wobei der elementare Informationsfluss I₁ der niedrigsten Vollständigkeitsstufe entspricht und Informationen I₁ vom Typ Video oder Audio aufweist, die dazu vorgesehen sind, von einer Multimedia-Vorrichtung nach Entspreizen verwendet zu werden, so dass sie direkt für ein menschliches Wesen nachvollziehbar und verständlich sind, ohne dass es nötig ist, ihnen Informationen I₂ bis Iₖ hinzuzufügen, wobei der elementare Informationsfluss I₁ mit einem Steuerwort CW₁ gespreizt ist,
- wobei der elementare Informationsfluss Iᵢ, für i zwischen 2 und k, auf einer Vollständigkeitsstufe i ist, die über der Vollständigkeitsstufe i-1 des elementaren Informationsflusses Iᵢ₋₁ ist und ihn direkt verbessert, wobei der elementare Informationsfluss Iᵢ Informationen Ii vom selben Typ wie die Informationen Iᵢ₋₁ enthält, die dazu vorgesehen sind, von der Multimediavorrichtung nach Entspreizung zur gleichen Zeit wie die Informationen I₁ bis Iᵢ₋₁ verwendet zu werden, so dass die so erzielte Kombination der Informationen I₁ bis Iᵢ direkt für ein menschliches Wesen nachvollziehbar und verständlich ist, wobei die Informationen Iᵢ die Information Iᵢ₋₁ auf die Art vervollständigen, dass die Informationen I₁ schrittweise der Reihe nach mit den Informationen I₂ und den folgenden vervollständigt werden können, was die Verwendung des Multimediaprogramms durch die Multimediavorrichtung auf k unterschiedlichen Vollständigkeitsstufen ermöglicht, wobei die Vollständigkeitsstufe in dem Maße zunimmt, wie der Index i zunimmt, wobei jeder elementare Informationsfluss Iᵢ mit einem Steuerwort CWᵢ, das unterschiedlich ist von den Steuerworten CWⱼ, wobei j unterschiedlich von i ist, gespreizt ist, wobei der Sender aufweist:
- einen Spreizer geeignet zum Spreizen der elementaren Informationsflüsse I₁ bis Iₖ jeweils mit Steuerworten CW₁ bis CWₖ, wobei jedes Steuerwort CWᵢ unterschiedlich von den Steuerworten CWⱼ ist, wobei j unterschiedlich von i ist,
- einen Generator von ECMᵢ-Nachrichten, wobei i eine ganze Zahl zwischen 1 und k ist, wobei jede Nachricht ECMᵢ Zugriffsbedingungen CAᵢ und ein erstes Kryptogramm (CWᵢ)_{CEi}, erhalten durch Verschlüsseln des Steuerworts CWᵢ mit einem Nutzungsschlüssel CEᵢ, aufweist,
dadurch charakterisiert, dass der Sender geeignet ist, zweite Kryptogramme (CWᵢ)_{Ki} für i zwischen 1 und k-1, erhalten durch Verschlüsseln derselben Steuerworte CW₁ bis CWₖ₋₁ mit jeweiligen Schlüsseln K₁ bis Kₖ₋₁, konstruiert mit mindestens einem Teil der Menge gebildet aus den in der ECMₖ vorhandenen Nachrichten und dem Nutzungsschlüssel CEₖ, zu konstruieren und zu senden.

## Claims

1. Process for controlling hierarchical access to a multimedia program, said multimedia program being formed from at least k elementary streams of information I₁ to Iₖ, where k is strictly greater than 1, said elementary streams of information I₁ to Iₖ being temporally synchronised in relation to one another and hierarchically organised in relation to one another in the following way, so as to correspond to ordered levels of completeness of said multimedia program:
- the elementary flow of information I₁ corresponding to the lowest level of completeness, and containing information I₁ of video or audio type intended to be used by a multimedia device after descrambling, in order to be rendered directly comprehensible and intelligible to a human being without it being necessary to add thereto information I₂ to Iₖ, the elementary stream of information I₁ being scrambled with a control word CW₁,
- the elementary flow of information Iᵢ, for i between 2 and k, being at a level of completeness i higher than the level of completeness i-1 of the elementary stream of information Iᵢ₋₁, the elementary stream of information Iᵢ containing information Iᵢ of the same type as the information Iᵢ₋₁ intended to be used by the multimedia device, after descrambling, at the same time as the information I₁ to Iᵢ₋₁, in order that the combination of the information I₁ to Iᵢ thus produced is directly comprehensible and intelligible to a human being, the information Iᵢ supplementing the information Iᵢ₋₁, so that the information I₁ can gradually be supplemented, in order, by the information I₂ and following information, making possible the use, by the multimedia device, of the multimedia program at k different levels of completeness, the completeness level increasing as the index i increases, each elementary stream of information Iᵢ being scrambled with a control word CWᵢ different from the control words CWⱼ, where j is different from i,
said process comprising:
- reception (100) of messages ECMᵢ (Entitlement Control Messages), where i is a number between 1 and k, each message ECMᵢ containing conditions of access CAᵢ and a first cryptogram (CWᵢ)_{CEi} obtained by encrypting control word CWᵢ with an operating key CEᵢ,
- transmission (106) at least of message ECMₖ to a security processor,
- comparison (108), by the security processor, of the conditions of access CAₖ contained in message ECMₖ to rights of access TA previously recorded in the security processor, and
- decryption (114), by the security processor, of the first cryptogram (CWₖ)_{CEk} contained in message ECMₖ with the aid of operating key CEₖ only if the conditions of access CAₖ correspond to the rights of access TA, and, in the contrary case, discontinuance of the processing of the received message ECMₖ,
**characterised in that** said process comprises:
- reception (100) and transmission (106), to the security processor, of second cryptograms (CWᵢ)_{Ki}, for i between 1 and k-1, obtained by encrypting control words CW₁ to CWₖ₋₁ with respective keys K₁ to Kₖ₋₁ constructed with at least a part of the set formed from the information present in ECMₖ and from operating key CEₖ,
- decryption (116, 118) of the second cryptograms (CWᵢ)_{Ki} only if the conditions of access CAₖ received in message ECMₖ correspond to the rights of access TA, and without comparing, beforehand, the conditions of access CAᵢ to the rights of access TA for i between 1 and k-1, and, in the contrary case,
- inhibition (110) of the decryption of the second cryptograms (CWᵢ)_{Ki} if the conditions of access CAₖ do not correspond to the rights of access TA.

2. Process according to Claim 1, wherein the process includes the construction (116) of at least one of the keys Kᵢ, for i between 1 and k-1, from information contained solely in message ECMₖ, so that if the processing of message ECMₖ is discontinued, because the conditions of access CAₖ do not correspond to the rights of access TA, the decryption of at least one of the second cryptograms is rendered impossible.

3. Process according to Claim 2, wherein the process includes the construction (116) of at least one of the keys Kᵢ from the control word CWₖ obtained after decryption of the first cryptogram (CWₖ)_{CEk} only when the conditions of access CAₖ correspond to the rights of access TA.

4. Process according to Claim 3, wherein the process includes the construction (116) of key Kₖ₋₁ from the control word CWₖ obtained after decryption of the first cryptogram (CWₖ)_{CEk} only when the conditions of access CAₖ correspond to the rights of access TA, and the construction (118) of each key Kᵢ, for i strictly less than k-1, from the control word CWᵢ₊₁ obtained after decryption of the second cryptogram (CWᵢ₊₁)_{Ki+1}.

5. Process according to Claim 4, wherein each received message ECMᵢ for i between 2 and k includes the second cryptogram (CWᵢ₋₁)_{Ki-1}, the process including the decryption (118), step by step, of the second cryptograms (CWⱼ)_{Kj} for j between k-2 and 1, contained respectively in messages ECMₖ₋₁ to ECM₂.

6. Process according to Claim 4, wherein message ECMₖ includes, in addition, the second cryptograms (CWᵢ)_{Ki} for i between 1 and k-1, the process including for message ECMₖ, besides the decryption of the first cryptogram (CWₖ)_{CEk}, the decryption (146), step by step, of the set of the second cryptograms contained in said message ECMₖ.

7. Process according to any one of the preceding claims, wherein each elementary stream of information Iᵢ, for i strictly greater than 1, does not contain enough information to be directly comprehensible and intelligible to a human being when it is played on its own by the multimedia device.

8. Process according to any one of the preceding claims, wherein each elementary stream of information I₁ to Iₖ is transported by means of a respective data channel C₁ to Cₖ.

9. Process for conditioning hierarchical access to a multimedia program, said multimedia program being formed from at least k elementary streams information I₁ to Iₖ, where k is strictly greater than 1, said elementary streams of information I₁ to Iₖ being temporally synchronised in relation to one another and hierarchically organised in relation to one another in the following way, so as to correspond to ordered levels of completeness of said multimedia program:
- the elementary stream of information I₁ corresponding to the lowest level of completeness, and containing information I₁ of video or audio type intended to be used by a multimedia device after descrambling, in order to be rendered directly comprehensible and intelligible to a human being without it being necessary to add thereto information I₂ to Iₖ,
- the elementary stream of information Iᵢ, for i between 2 and k, being at a level of completeness i higher than the level of completeness i-1 of the elementary stream of information Iᵢ₋₁, and enhancing it directly, the elementary stream of information Iᵢ containing information Iᵢ of the same type as the information Iᵢ₋₁ intended to be used by the multimedia device, after descrambling, with the information I₁ to Iᵢ₋₁, in order that the combination of the information I₁ to Iᵢ thus produced is directly comprehensible and intelligible to a human being, the information Iᵢ supplementing the information Iᵢ₋₁, so that the information I₁ can gradually be supplemented, in order, by the information I₂ and following information, making possible the use, by the multimedia device, of the multimedia program at k different levels of completeness, the level of completeness increasing as the index i increases,
said process comprising:
- scrambling of the elementary streams of information I₁ to Iₖ respectively with control words CW₁ to CWₖ, each control word CWᵢ being different from the control words CWⱼ, where j is different from i,
- construction and transmission of messages ECMᵢ, where i is an integer between 1 and k, each message ECMᵢ containing conditions of access CAᵢ and a first cryptogram (CWᵢ)_{CEi} obtained by encrypting the control word CWᵢ with an operating key CEᵢ,
**characterised in that** said process comprises:
- construction and transmission of second cryptograms (CWᵢ)_{Ki} for i between 1 and k-1, obtained by encrypting the same control words CW₁ to CWₖ₋₁ with respective keys K₁ to Kₖ₋₁ constructed with at least a part of the set formed from the information present in ECMₖ and from operating key CEₖ.

10. Security processor for the implementation of a process for controlling hierarchical access according to any one of Claims 1 to 6, said security processor including a memory storing rights of access TA previously recorded and at least one operating key CEₖ, as well as:
- means for comparing the conditions of access CAₖ contained in a received message ECMₖ to rights of access TA previously recorded in the memory of said security processor, and
- means for decrypting the first cryptogram (CWₖ)_{CEk} contained in message ECMₖ with the aid of operating key CEₖ only if the conditions of access CAₖ correspond to the rights of access TA and, in the contrary case, to discontinue the processing of message ECMₖ,
**characterised in that** the security processor also includes:
- means for receiving (100) second cryptograms (CWᵢ)_{Ki} for i between 1 and k-1, obtained by encrypting control words CW₁ to CWₖ₋₁ with respective keys K₁ to Kₖ₋₁ constructed with at least a part of the set formed from the information present in message ECMₖ and from operating key CEₖ,
- means for decrypting (116, 118) the second cryptograms (CWᵢ)_{Ki} only if the conditions of access CAₖ received in message ECMₖ correspond to the rights of access TA, and without comparing, beforehand, the conditions of access CAᵢ to the rights of access TA for i strictly less than k, and, in the contrary case,
- means for inhibiting (110) the decryption of the second cryptograms (CWᵢ)_{Ki} if the conditions of access CAₖ do not correspond to the rights of access TA.

11. Transmitter of hierarchically scrambled multimedia programs, said multimedia programs being formed from at least k elementary streams of information I₁ to Iₖ, where k is strictly greater than 1, said elementary streams of information I₁ to Iₖ being temporally synchronised in relation to one another and hierarchically organised in relation to one another in the following way, so as to correspond to ordered levels of completeness of said multimedia programs:
- the elementary stream of information I₁ corresponding to the lowest level of completeness, and contains information I₁ of video or audio type intended to be used by a multimedia device after descrambling, in order to be rendered directly comprehensible and intelligible to a human being without it being necessary to add thereto information I₂ to Iₖ, the elementary stream of information I₁ being scrambled with a control word CW₁,
- the elementary stream of information Iᵢ, for i between 2 and k, being at a level of completeness i higher than the level of completeness i-1 of the elementary stream of information Iᵢ₋₁, and enhancing it directly, the elementary stream of information Iᵢ containing information Iᵢ of the same type as the information Iᵢ₋₁ intended to be used by the multimedia device, after descrambling, at the same time as the information I₁ to Iᵢ₋₁, in order that the combination of the information I₁ to Iᵢ thus produced is directly comprehensible and intelligible to a human being, the information Iᵢ supplementing the information Iᵢ₋₁, so that the information I₁ can gradually be supplemented, in order, by the information I₂ and following information, making possible the use, by the multimedia device, of the multimedia program at k different levels of completeness, the level of completeness increasing as the index i increases, each elementary stream of information Iᵢ being scrambled with a control word CWᵢ different from the control words CWⱼ, where j is different from i, said transmitter comprising:
- a scrambler that is suitable to scramble the elementary streams of information I₁ to Iₖ respectively with control words CW₁ to CWₖ, each control word CWᵢ being different from the control words CWⱼ, where j is different from i,
- a generator of messages ECMᵢ, where i is an integer between 1 and k, each message ECMᵢ containing conditions of access CAᵢ and a first cryptogram (CWᵢ)_{CEi} obtained by encrypting control word CWᵢ with an operating key CEᵢ,
**characterised in that** said transmitter is capable of constructing and broadcasting second cryptograms (CWᵢ)_{Ki} for i between 1 and k-1, obtained by encrypting the same control words CW₁ to CWₖ₋₁ with respective keys K₁ to Kₖ₋₁ constructed with at least a part of the set formed from the information present in ECMₖ and from operating key CEₖ.
